(19) Europäisches Patentamt
European Patent Office
Office européen des brevets

(11) Veröffentlichungsnummer: **0 103 115**
**A1**

(12) **EUROPÄISCHE PATENTANMELDUNG**

(21) Anmeldenummer: **83107184.0**

(22) Anmeldetag: **22.07.83**

(51) Int. Cl.³: **C 08 K 5/15**, C 08 L 21/00

(30) Priorität: **03.08.82 DE 3228861**

(43) Veröffentlichungstag der Anmeldung: **21.03.84**
**Patentblatt 84/12**

(84) Benannte Vertragsstaaten: **DE FR GB IT**

(71) Anmelder: **BAYER AG, Konzernverwaltung RP**
**Patentabteilung, D-5090 Leverkusen 1 Bayerwerk (DE)**

(72) Erfinder: **Brück, Dieter Wolfram, Dr.,**
**Kattowitzer-Strasse 34, D-5000 Koeln 80 (DE)**
Erfinder: **Jeblick, Werner, Dr., Walter-Flex-Strasse 30,**
**D-5090 Leverkussen (DE)**
Erfinder: **Ruetz, Lothar, Dr., Wilhelm Busch-Strasse 37,**
**D-4047 Dormagen 5 (DE)**

(54) **Verfahren zur Verbesserung der Ozonbeständigkeit von Kautschuk.**

(57) Die Ozonbeständigkeit von Natur- und/oder Synthesekautschuk wird verbessert, wenn man Enolether der Formel

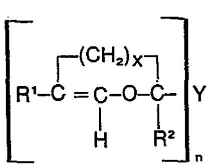

einarbeitet, wobei
$R^1$ und $R^2$ Wasserstoff oder $C_1$–$C_{10}$-Alkyl
$R^2$ zusätzlich Formyl oder eine Bindung zu Y
X 1 oder 2,
n 1 bis 4 und
Y einen n-wertigen organischen Rest darstellen.

EP 0 103 115 A1

BAYER AKTIENGESELLSCHAFT 5090 Leverkusen, Bayerwerk

Zentralbereich
Patente, Marken und Lizenzen Jo/Hed-c

## Verfahren zur Verbesserung der Ozonbeständigkeit von Kautschuk

Die Erfindung betrifft ein Verfahren zur Verbesserung der Ozonbeständigkeit von Natur- und/oder Synthesekautschuk, mittels Enolether der allgemeinen Formel I

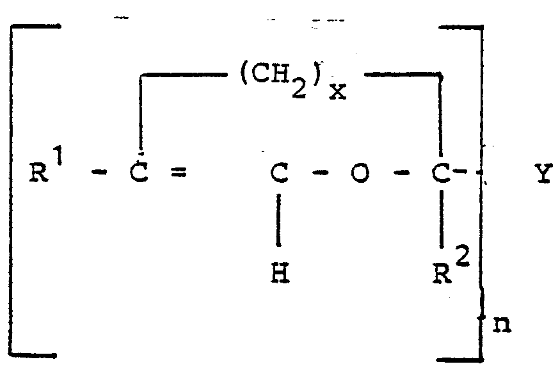

I

in der

$R^1$ und $R^2$ Wasserstoff oder $C_1$-$C_{10}$-, bevorzugt $C_1$-$C_6$ Alkyl
$R^2$ zusätzlich Formyl oder eine Bindung zu Y
x 1 oder 2, bevorzugt 2,
n 1 - 4, bevorzugt 1 - 3 und

Y einen n-wertigen organischen Rest darstellen.

Geeignete Reste Y sind beispielsweise

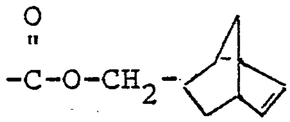 ; 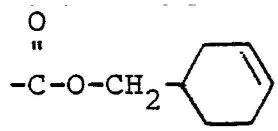 ; $-\overset{O}{\overset{\|}{C}}-O-CH_2-$;

$-\overset{O}{\overset{\|}{C}}-O-C_zH_{2z}-O-\overset{O}{\overset{\|}{C}}-$, $-O-C_zH_{2z}-O-$;

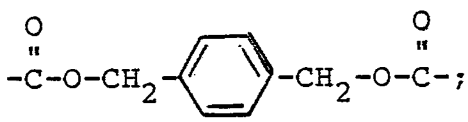; $-C_zH_{2z}-O-C_zH_{2z}-O-C_zH_{2z}-$

$[-(CH_2)_z-O-CO-]_pR^3$;

worin Z eine Zahl 1 bis 10
p eine Zahl 2 bis 4 und
$R^3$ einen zwei- bis vierwertigen organischen Rest, insbesondere eine $C_1$-$C_{10}$-Alkylen-, $C_2$-$C_{10}$-Alkenylen, eine Phenylen oder Cyclohexylengruppe bedeuten.

Bevorzugte Verbindungen entsprechen der Formel

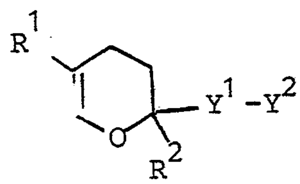

worin

$R^1$ und $R^2$ Wasserstoff oder Methyl,

$Y^1$ $-CH_2-O-\overset{\overset{O}{\|}}{C}-$, $-\overset{\overset{O}{\|}}{C}-O-CH_2-$ oder $-O-(CH_2)_m-O-$

$Y^2$ einen Rest der Formeln

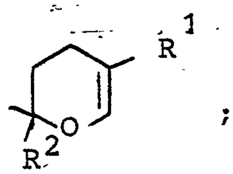 ; 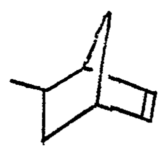 ; 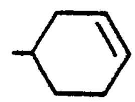

und m eine Zahl 4 bis 8 bedeuten.

Erfindungsgemäße Enolether sind beispielsweise

Norbornenylmethyl-(3,4-dihydro-2H-pyran-2-carboxylat),
Cyclohexenylmethyl-(3,4-dihydro-2H-pyran-2-carboxylat),
3,4-Dihydro-2,5-dimethyl-2H-pyran-2-methyl(3,4-dihydro-2,5-dimethyl-2H-pyran-2-carboxylat),
3,4-Dihydro-2,5-diisobutyl-2H-pyran-2-methyl(3,4-dihydro-2,5-diisobutyl-2H-pyran-carboxylat),
3,4-Dihydro-2,5-didecyl-2H-pyran-2-methyl(3,4-dihydro-2,5-didecyl-2H-pyran-2-carboxylat).

Die Herstellung dieser Verbindung wird beispielsweise in der US-PS 2 537 921 beschrieben.

Ethylen-1,2-bis(3,4-dihydro-2H-pyran-2-carboxylat), Propylen-1,2-bis(3,4-dihydro-2H-pyran-2-carboxylat), p-Xylylen-bis(3,4-dihydro-2H-pyran-2-carboxylat).

Diese Verbindungen werden beispielsweise durch Umsetzung von 1,2-Dihalogenethan, 1,2-Dihalogenpropan oder p-Xylylendihalogenid mit dem Silbersalz von 3,4-Dihydro-2H-pyran-2-carbonsäure hergestellt. Die Herstellung des Silbersalzes wird in der US-PS 2 514 172 beschrieben.

1,2-Bis(3,4-dihydro-2H-pyran-2-oxy)ethan, 1,2-Bis(3,4-dihydro-5-methyl-2H-pyran-2-oxy)ethan, 1,4-Bis(3,4-dihydro-2H-pyran-2-oxy)-butan.

Diese Verbindungen werden z.B. von Smith et.al. Journal of the American Chemical Society Vol. 73 (1951) 5267 beschrieben.

2,2'-Bis(3,4-dihydro-5-methyl-2H-pyranyl)ether.

Diese Verbindung läßt sich in bekannter Weise durch Umsetzung von Methacrolein mit Divinylether herstellen.

1,2-Bis(3,4-dihydro-2H-pyran-2-methoxy)-ethan, 1,1-Bis (3,4-dihydro-5-methyl-2H-pyran-2-methoxy)-ethan und Bis-(3,4-dihydro-3-dimethyl-2H-2-methoxy)-methan.

Bis(3,4-dihydro-2H-pyran-2-methyl)-succinat, -adipat, -sebacat, -tetrachlorphthalat.

0103115

Diese Verbindungen werden durch Kondensation von 3,4-Dihydro-2H-pyranyl-2-alkanolen mit den Dicarbonsäuren, deren Säurechloriden oder Anhydriden hergestellt.

(3,4-dihydro-2H-2-formylpyranyl-2)-(3,4-dihydro-2H-pyranyl-2)-methanol; 5,8,10-Trioxa-7hydroxy-9,11-bis-2-(3,4-dihydro-2H-pyranyl-2-)-spiro (5,5)-undec-3-en; 1-Hydroxy-1-(3,4-dihydro-2H-pyranyl-2)-1'-(3,4-dihydro-2H-pyranyl-2)-1'-(3,4-dihydro-2H-2-formylpyranyl-2)-dimethylether.

Diese Verbindungen werden gemäß GB-PS 1 108 017 hergestellt.

Die Enolether sind feste oder flüssige Substanzen, welche sich gut und homogen im Rohkautschuk einarbeiten und verteilen lassen. Sie besitzen gegenüber den bekannten Ozonschutzmitteln (DE-AS 1 917 600, DE-AS 2 548 911, DE-AS 1 693 163) insbesondere im Naturkautschuk eine bessere Wirksamkeit und verfärben nicht.

Geeignete Kautschuke sind:
Naturkautschuk oder Synthesekautschuk, z.B. Uni- oder Mischpolymerisate konjugierter Diolefine wie Butadien, Dimethylbutadien, Chloropren und Isopren mit Vinylverbindungen wie Styrol, α-Methylstyrol, Acrylnitril oder Methacrylnitril, Poly-(meth)-acrylate sowie Terpolymere aus Ethylen, Propylen mit mindestens einem nichtkonjugierten Dien, wie Dicyclopentadien, 5-Ethyliden-2-norbornen oder 1,4-Hexadien.

Die Ozonschutzmittel können in die Kautschuke auf übliche Weise eingemischt werden, beispielsweise auf einem Mischwalzwerk oder im Innenmischer. Sie werden vor oder gleichzeitig mit den anderen Bestandteilen zugesetzt; können aber auch als letzter Mischungsbestandteil zugegeben werden.

Übliche weitere Bestandteile sind beispielsweise Vulkanisiermittel wie Schwefel, Vulkanisationsbeschleuniger, beispielsweise Thiazole wie 2-Merkaptobenzthiazol, Dibenzothiazylsulfid, Sulfenamide wie Benzothiazyl-2-cyclohexylsulfenamid, Benzothiazyl-2-t-butylsulfenamid oder Benzthiazylsulfensäuremorpholid, Guanidine wie Diphenylguanidin oder Di-o-tolylguanidin, Dithiocarbamate wie Zink-diethyldithiocarbamat, Thiurame wie Tetramethylthiuramidsulfid und Ethylenthioharnstoff. Weiterhin können andere Hilfsstoffe, beispielsweise Füllstoffe wie Ruß oder Kreide, Antioxidantien, Wachse, Pigmente, Zinkoxid, Stearinsäure und Verarbeitungsöle zugemischt werden.

Die Enolether werden bevorzugt in Mengen von 0,05 - 10 Gew.%, insbesondere 0,5 - 5 Gew.%, bezogen auf Kautschuk, eingemischt.

Die Vulkanisation des Kautschuks erfolgt durch Erhitzen auf die üblichen Temperaturen, vorzugsweise 120 - 170°C.

Beispiel 1

3,4-Dihydro-2H-pyran-2-methyl-(3,4-dihydro-2H-pyran-2-carboxylat)

Zu (2,5 Mol) 3,4-Dihydro-2H-pyran-2-carboxaldehyd werden in einem wassergekühlten Reaktor 0,7 g Aluminiumisopropylat in Form einer $CCl_4$-Lösung von 0,5 g Aluminiumisopropylat je 1 $cm^3$ Lösung langsam zugetropft. Die Mischung wurde zur Verteilung des Aluminiumisopropylates gerührt und nach Einsetzen der exothermen Reaktion durch Kühlung auf 35 - 40° C gehalten. Nach einer gesamten Reaktionszeit von 4 Stunden wurde eine fraktionierte Destillation der Lösung durchgeführt. 3,4-Dihydro-2H-pyran-2-methyl-(3,4-dihydro-2H-pyran-2-carboxylat) destillierte bei einer Temperatur von 115 - 119° C bei 6 Pa über, Ausbeute: 74% der Theorie.

Beispiel 2

Aldolkondensationsprodukte von 3,4-Dihydro-2H-pyran-2-carboxaldehyd gemäß der Beispiele 8 - 10 der GB-Patentschrift 1.108.017 z.B.:
100 g 3,4-Dihydro-2H-pyran-2-carboxaldehyd werden in einem Kolben mit Rührer und Thermometer vorgelegt. Unter Rühren werden 0,5 ml konzentrierte Natronlauge zugetropft. Dabei steigt die Temperatur der Reaktionslösung auf 115° C an. Die Reaktionsmischung wurde anschließend noch ca. 30 Minuten gerührt und enthält ein Gemisch von 30 - 40 %

2-(3,4-dihydro-2H-pyran-2-carboxaldehyd)-2-(3,4-dihydro-2H-pyran)methanol und 50 - 60 %, 5,8,10-trioxa-7-hydroxy-9, 11-bis-2-(3,4-dihydro-2H-pyran)-spiro (5,5) undec-3-en bzw. seine tautomere Form 1-Hydroxy-1-(2-(3,4-dihydro-2H-pyran))-1'-(2'-(3',4'-dihydro-2H-pyran))-1'-(3",4"-dihydro-2H-pyran-2"-carboxaldehyd))-dimethylether wie im Beispiel 17 der GB-Patentschrift 1.108.017 nachgewiesen wurde.

Beispiel 3

1,4-Bis(3',4'-dihydro-2H-pyran-2-oxy)-butan

In einem Autoklaven werden je Mol Butandiol-1,4-divinylether zwei Mol Acrolein, 5 g Hydrochinon und 300 ml Toluol vorgelegt. Anschließend wird das Reaktionsgemisch bei ca. 2 bar 9 Stunden auf 110° C erhitzt. Das Gemisch wird dann destilliert. Das bei 105 - 112° C/ 0,4 Torr erhaltene Destillat hat nach IR und NMR Analyse die gewünschte Struktur.

Beispiel 4

3,4-Dihydro-2,5-dimethyl-2H-pyran-2-methyl-(3,4-dihydro-2,5-dimethyl-2H-pyran-2-carboxylat)

Die Umsetzung von 2,5 Mol 3,4-Dihydro-2,5-dimethyl-2H-pyran-2-carboxaldehyd zu der gewünschten Verbindung erfolgte wie in Beispiel 1 beschrieben. Die Reaktionslösung wurde jedoch abweichend von Beispiel 1 zunächst auf 100°C erhitzt, nach Anspringen der Reaktion 30 Minuten auf

dieser Temperatur gehalten und anschließend noch bei 150°C 30 Minuten nachgerührt. Nach Abdestillation des nicht umgesetzten Aldehyds destillierte die gewünschte Verbindung bei 106-109°C/~0,15 Torr über.

Beispiel 5

Estergemisch

1 Mol 3,4-Dihydro-2H-pyran-2-carboxaldehyd und 1 Mol Norborn-3-en-1-carboxaldehyd wurden in einem wassergekühlten Reaktor vorgelegt und wie in Beispiel 1 beschrieben umgesetzt. Bei der Reaktion entstehen neben größeren Mengen an (Norborn-3-en-1-methyl)-(3,4-Dihydro-2H-pyran-2-carboxylat) auch die 3 übrigen, möglichen Kombinationen als Nebenprodukte. Das Reaktionsgemisch wurde daher fraktioniert und die bei 130°C/0,8 Torr abdestillierte Fraktion (nach GC-Analyse: 26 % der Verbindung nach Beispiel 1, 36 % (Norborn-3-en-1-methyl), (3,4-Dihydro-2H-pyran-2-carboxylat), 7 % 3,4-Dihydro-2H-pyran-2-methyl-(norborn-3-en-1-carboxylat); 31 % Norborn-3-en-1-methyl-(norborn-3-en-1-carboxylat) isoliert.

Beispiel 6

Folgende Kautschukmischung wurde auf der Walze hergestellt:

| | |
|---|---|
| Polychloropren | 100,0 Gew.-Teile |
| Magnesiumoxid | 4,0 Gew.-Teile |
| Stearinsäure | 0,5 Gew.-Teile |
| Gefällte Kieselsäure (BET-Wert: 180 $m^3/g$) | 20,0 Gew.-Teile |

| | |
|---|---|
| Weichkaolin | 170,0 Gew.-Teile |
| Titandioxid | 5,0 Gew.-Teile |
| Antimonoxid | 5,0 Gew.-Teile |
| Naphthenischer Minaralölweichmacher | 20,0 Gew.-Teile |
| Chlorparaffin | 10,0 Gew.-Teile |
| Ethylenthioharnstoff | 1,2 Gew.-Teile |
| Zinkoxid | 5,0 Gew.-Teile |
| Ozonschutzmittel gemäß Tabellen | |

Von diesen Mischungen wurden Prüfkörper von 0,4 x 4,5 x 4,5 cm vulkanisiert (Preßluftkanisation 30 min bei 150°C). Je 4 Prüfkörper wurden dann in einem Kunststoffrahmen so eingespannt, daß an der Oberfläche Dehnungen von 10, 20, 30 und 60 % entstehen.
Die gespannten Prüfkörper wurden mit einem Luftstrom, der 1000 Teile Ozon auf 100 Millionen Teile Luft enthielt, bei Raumtemperatur behandelt. Nach jeweils 2,4,6,8,24,48, 96 und 168 Stunden wurden die Proben mit dem Auge auf eventuelle Tisse untersucht. In der nachfolgenden Tabelle sind jeweils die Stunden bis zu ersten Rißbildungen eingetragen. Nach 168 Stunden wurden die Versuche abgebrochen. (Tabelle 3)

Beispiel 7

Folgende Kautschukmischung wurde auf der Walze hergestellt:

| | |
|---|---|
| Naturkautschuk | 100,0 Gew.-Teile |
| Zinkoxid | 10,0 Gew.-Teile |
| Gefällte Kreide | 160,0 Gew.-Teile |

| | |
|---|---|
| Titandioxid | 10,0 Gew.-Teile |
| Stearinsäure | 0,7 Gew.-Teile |
| Ozonschutzwachs | 2,0 Gew.-Teile |
| Dibenzothiazyldisulfid | 1,0 Gew.-Teile |
| Hexamethylentetramin | 0,25 Gew.-Teile |
| Schwfel | 2,2 Gew.-Teile |
| Ozonschutzmittel | 4,0 Gew.-Teile |

Die Prüfkörper wurden in der Presse 30 Min. bei 140° C vulkanisiert. Die Prüfung wurde ebenso durchgeführt wie im Beispiel 6 beschrieben, allerdings betrug die Ozonkonzentration statt 1000 Teile jetzt 100 Teile pro 100 Millionen Teile Luft (Tabelle 1).

Beispiel 8

Folgende Kautschukmischung wurde auf der Walze hergestellt:

| | |
|---|---|
| Styrol-Butadien Mischpolymerisat | 100,0 Gew.-Teile |
| Zinkoxid | 5,0 Gew.-Teile |
| Ruß (N 220) | 55,0 Gew.-Teile |
| Naphthenischer Mineralölweichmacher | 2,0 Gew.-Teile |
| Hocharomatischer Minaralölweichmacher | 2,0 Gew.-Teile |
| Stearinsäure | 2,0 Gew.-Teile |
| Ozonschutzwachs | 2,0 Gew.-Teile |
| Benzothiazyl-2-cyclohexylsulfenamid | 1,3 Gew.-Teile |
| Schwefel | 1,6 Gew.-Teile |
| Ozonschutzmittel | 4,0 Gew.-Teile |

Die Prüfkörper wurden in der Presse 30 min. bei 150° C vulkanisiert. Die Prüfung wurde ebenso durchgeführt wie in Beispiel 6 beschrieben, allerdings betrug die Ozonkonzentration statt 1000 Teile jetzt 200 Teile pro 100 Millionen Teile Luft (Tabelle a), bzw. 400 Teile pro 100 Millionen Teile Luft (Tabelle 2 b).

Tabelle 1 in Naturkautschuk (NR)

| Dehnung (%) | 10 | 20 | 30 | 60 |
|---|---|---|---|---|
| Produkt nach Beispiel 1 | >168 | >168 | 72 | 8 |
| Produkt nach Beispiel 2 | >168 | >168 | 24 | 8 |
| Produkt nach Beispiel 3 | >168 | >168 | >168 | 24 |
| Produkt nach Beispiel 4 | >168 | >168 | >168 | 96 |
| Produkt nach Beispiel 5 | >168 | >168 | >168 | >168 |

<u>Tabelle 2 a</u> in Styrol-Butadien-Kautschuk (SBR)

| Dehnung in % | 10 | 20 | 30 | 60 |
|---|---|---|---|---|
| Produkt nach Beispiel 1 | >168 | >168 | >168 | >168 |
| Produkt nach Beispiel 2 | >168 | >168 | >168 | >168 |
| Produkt nach Beispiel 3 | >168 | >168 | >168 | >168 |
| Produkt nach Beispiel 5 | >168 | >168 | >168 | >168 |

<u>Tabelle 2 b</u>

| | | | | |
|---|---|---|---|---|
| Produkt nach Beispiel 1 | >168 | >168 | 24 | 2 |
| Produkt nach Beispiel 3 | >168 | >168 | >168 | 2 |
| Produkt nach Beispiel 4 | >168 | >168 | >168 | 2 |
| Produkt nach Beispiel 5 | >168 | >168 | 4 | 2 |

<u>Tabelle 3</u> in Polychloropren (CR)

| Dehnung in % | Dosierung | 10 | 20 | 30 | 60 |
|---|---|---|---|---|---|
| Produkt nach Beispiel 1 | 1,0 Gew.-Teile | 168 | >168 | >168 | >168 |
| Produkt nach Beispiel 2 | 0,5 Gew.-Teile | 24 | 24 | 8 | 8 |
| Produkt nach Beispiel 5 | 1,0 Gew.-Teile | 168 | >168 | >168 | >168 |

Patentansprüche

1) Verfahren zur Verbesserung der Ozonbeständigkeit von Natur- und/oder Synthesekautschuk, dadurch gekennzeichnet, daß man Enolether der Formel

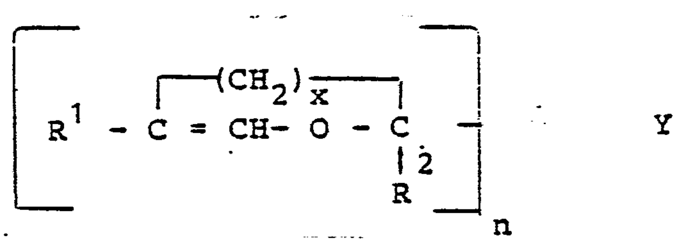

in der

$R^1$ und $R^2$ Wasserstoff oder $C_1$-$C_{10}$-Alkyl
$R^2$ zusätzlich Formyl oder eine Bindung zu Y,
x 1 oder 2
n 1 bis 4 und
Y einen n-wertigen organischen Rest

darstellen,

als Ozonschutzmittel einsetzt.

2) Verfahren nach Anspruch 1, wobei

$R^1$ und $R^2$ $C_1$-$C_6$-Alkyl
x 2 und
n 1 bis 3

darstellen.

3. Verfahren nach Anspruch 1, wobei

Y $-COOCH_2$ 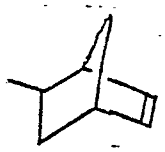 ; $-COOCH_2-$ 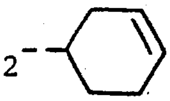 ; $-COOCH_2$;

$-COOC_zH_{2z}-O-CO-$; $-OC_zH_{2z}-O-$;

$-COOCH_2-$ 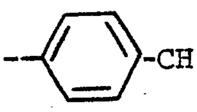 $-CH_2-OCO-$; $-C_zH_{2z}-O-C_zH_{2z}-O-C_zH_{2z}-$

$[-(CH_2)_z-O-CO-]_p\ R^3$

z eine Zahl 1 bis 10

P eine Zahl 2 bis 4 und

$R^3$ einen zwei- bis vierwertigen organischen Rest bedeuten.

4. Verfahren nach Anspruch 1, dadurch gekennzeichnet, daß man Enolether der Formel

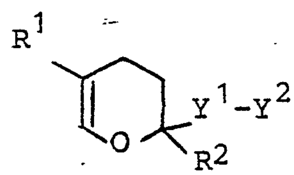

einsetzt, worin

$R^1$ und $R^2$ Wasserstoff oder Methyl,

$Y^1$ $-CH_2-OCO-$, $-COO-CH_2$ oder $-(CH_2)_m-O-$

$Y^2$ einen Rest der Formeln

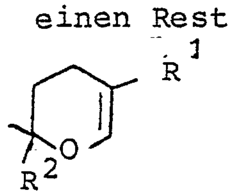 ; 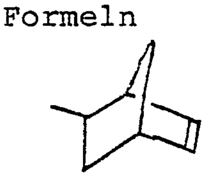 oder 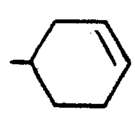

und m eine Zahl 4 bis 8 bedeuten.

Europäisches Patentamt

**EUROPÄISCHER RECHERCHENBERICHT**

0103115

Nummer der Anmeldung

EP 83 10 7184

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | GB-A-1 404 362 (ICI)<br>* Insgesamt *<br>----- | 1-4 | C 08 K 5/15<br>C 08 L 21/00 |
| | | | **RECHERCHIERTE SACHGEBIETE (Int. Cl. 3)** |
| | | | C 08 K<br>C 08 L |

Der vorliegende Recherchenbericht wurde für alle Patentansprüche erstellt.

| Recherchenort | Abschlußdatum der Recherche | Prüfer |
|---|---|---|
| DEN HAAG | 14-11-1983 | HOFFMANN K.W. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82